# EUROPÄISCHE PATENTANMELDUNG

(11) **EP 1 923 209 A1**
(43) Veröffentlichungstag der Anmeldung: **21.05.2008**
(21) Anmeldenummer: 07021625.4
(22) Anmeldetag: 07.11.2007
(51) Int. Cl.: B32B 3/28, B32B 21/13, E04C 2/34

(54) **Leichtbau-Verbundplatte**

(30) Priorität: 17.11.2006 DE 102006054634
(71) Anmelder: Kronotec AG, 6006 Luzern (CH)
(72) Erfinder:
(74) Vertreter: Wenzel & Kalkoff

(57) **Zusammenfassung**

Die Erfindung betrifft eine Leichtbau-Verbundplatte (2) mit Außenlagen (4) aus Holzwerkstorf und mit einer Mittellage (6), dadurch gekennzeichnet, dass die Mittellage (6) aus Holzwerkstoffplatte gefertigt ist, und dass die Holzwerkstoffplatte -bezogen auf die Ebene der Leichtbau-Verbundplatte- in einem Winkel α zur Ebene der Leichtbau-Verbundplatte (2) angeordnet ist. Die Erfindung betrifft weiter eine Mittellage und ein Verfahren zum Herstellen der Mittellage.

## Beschreibung

Leichtbau-Verbundplatte mit Mittellage und Mittellage sowie Verfahren zur Herstellung der Mittellage.

Die Erfindung betrifft eine Leichtbau-Verbundplatte mit Außenlagen aus Holzwerkstoff mit einer Mittellage.

Aus dem Stand der Technik sind Leichtbau-Verbundplatten bekannt. Sie sind meist als so genannte Wabenplatten konstruiert, die aus einer ersten und einer zweiten Außenlage aus Holzwerkstoffplatten bestehen, zwischen denen eine Mittellage aus Stegen angeordnet ist. Die Mittellage wird in der Regel aus Papier oder Pappe gefertigt. Außen- und Mittellagen sind miteinander verleimt. Die Stege der Mittellage sind senkrecht zwischen den Außenlagen angeordnet. Sie bilden meist wabenförmige Muster. Die Höhe der Stege bestimmt wesentlich die Stärke der gesamten Leichtbau-Verbundplatte. Die Stabilität der Leichtbau-Verbundplatte wird nur zum Teil durch die Festigkeit der Außenlagen vorgegeben. Wesentlich - insbesondere für die Druckfestigkeit - ist die Anzahl und Anordnung der Stege. Zahlreiche Stege steigern die Druckfestigkeit, aber auch das Gewicht. Wenige Stege ergeben eine besonders leichte Leichtbau-Verbundplatte mit geringer Festigkeit.

Durch die Gestaltung der Außenlagen der Leichtbau-Verbundplatte und durch das Befestigen von Umleimern an den Kanten der Platte können die Leichtbau-Verbundplatten ein sehr hochwertiges Aussehen erhalten und z. B. im Möbelbau oder Innenausbau eingesetzt werden. Bedingt durch den vorstehend beschriebenen Aufbau weist die Leichtbau-Verbundplatte nur eine geringe Druckfestigkeit auf. Eine Verwendung dieser Platten in tragender Funktion scheidet aus.

Der Erfindung liegt die Aufgabe zugrunde, eine Leichtbau-Verbundplatte derart weiter zu entwickeln, dass verbesserte Fertigkeitseigenschaften erreicht werden.

Diese Aufgabe wird gelöst durch eine Leichtbau-Verbundplatte mit Außenlagen aus Holzwerkstoff und mit einer Mittellage, die aus Holzwerkstoff gefertigt ist, wobei der Holzwerkstoff - bezogen auf die Ebene der Leichtbau-Verbundplatte - in einem Winkel α zur Ebene der Verbundplatte angeordnet ist.

Holzwerkstoffe, insbesondere Spanplatte, Oriented Strand Board (OSB) oder Faserplatte, eignen sich sehr gut als Mittellage für eine Leichtbau-Verbundplatte, obwohl sie auf den ersten Blick als schwerer und damit nachteilig erscheinen mag. Die Mittellage aus Holzwerkstoff wird auch nicht in gleicher Weise wabenartig angeordnet werden wie eine Mittellage aus Papier oder Pappe. Dafür bietet sie jedoch überraschende Vorteile, indem sie durch die erfindungsgemäß winklige Anordnung, bezogen auf die Außenlagen, eine für gattungsgemäße Leichtbau-Verbundplatten außerordentlich hohe Druckfestigkeit schafft, ohne das Gewicht unangemessen zu erhöhen. Dadurch, dass die beiden Außenlagen bevorzugt durch Verleimen steif mit der Mittellage verbunden sind, ergibt sich eine gegenüber dem Stand der Technik deutlich erhöhte Steifigkeit und ein verbessertes Kriechverhalten. Besonders vorteilhaft erweist sich die verbesserte Tragfähigkeit der erfindungsgemäßen Leichtbau-Platte: die erfindungsgemäße Mittellage aus Holzwerkstoffplatten, die in einem Winkel α zu den Außenlagen angeordnet sind, ermöglichen eine Belastung der Leichtbau-Verbundplatte in zwei Tragrichtungen.

Für übliche Einsatzbereiche wie Möbelbau und Innenausbau, aber auch für einfache konstruktive Einsätze genügt z. B. bereits eine 1 mm starke Spanplatte oder MDF-Platte, die winklig als Mittellage angeordnet ist. Es können meist auch 2 oder 3 mm starke Holzwerkstoffplatten eingesetzt werden. Die Stärke der Holzwerkstoffplatte wird in Abstimmung auf den jeweiligen Verwendungszweck der Leichtbau-Verbundplatte gewählt werden. Dabei können beispielsweise stärkere Platten für die Mittellage in weiterem Abstand angeordnet werden, so dass die Verwendung stärkerer Platten nicht notwendigerweise zu einem höheren Gesamtgewicht der Leichtbau-Verbundplatte führt. Anders als bei bekanntenLeichtbau-Verbundplatten können erfindungsgemäße Platten durch Auswahl und Anordnung insbesondere der Mittellagen aber auch durch angemessene Auswahl der Außenlagen für konstruktive Zwecke bis hin zu statisch belasteten Bauteilen hergestellt werden. Beispielsweise kann eine Platte mit einer Mittellage aus 6 mm MDF-Platten und Außenlagen aus OSB-Platten als Wandelement im Hausbau eingesetzt werden.

Das Gewicht der Leichtbau-Verbundplatte kann in einem weiten Bereich eingestellt werden. So ist beispielsweise eine Spanplatte mit einem Gewicht zwischen 400 kg/m³ und 450 kg/m³, vorzugsweise von ca. 430 kg/m³ besonders geeignet als Mittellage für eine Leichtbau-Verbundplatte. Grundsätzlich stehen Spanplatten mit einem Gewicht von bis zu 850 kg/m³ zur Verfügung. MDF-Platten stehen zur Verwendung als Mittellage in einem Gewichtsbereich von 500 kg/m³ bis 1.000 kg/m³ zur Verfügung. Werden MDF- oder HDF-Platten mit höherem Gewicht eingesetzt, dann können aufgrund der höheren Festigkeitseigenschaften dünnere Platten eingesetzt werden, so dass das Gesamtgewicht der Mittellage dem einer Verbundplatte mit einer Mittellage aus Spanplatte vergleichbar ist. Gegenüber bekannten Platten (Standardplatten) mit einer Plattenstärke von 10-30 mm, die ein Flächengewicht von 5-20 kg/m² aufweisen, wiegen erfindungsgemäße Leichtbau-Verbundplatten nur 4-10 kg/m². Bei stärkeren Platten wird der Unterschied noch wesentlich auffälliger: Standard-Platten wiegen 18-30 kg/m² bei einer Plattenstärke von 30 bis 40 mm. Erfindungsgemäße Leichbau-Verbundplatten gleicher Stärke wiegen nur 6-12 kg/m².

Die Außenlage der Leichtbau-Verbundplatte kann aus beliebigen Holzwerkstoffen oder Massivholz bestehen. Für dekorative Zwecke können die Außenlagen aus Span- oder Faserplatten bestehen, die ggf. mit einer dekorativen Oberfläche versehen sind. Sie können bspw. lackiert, laminiert oder furniert sein. Soll die Leichtbau-Verbundplatte für konstruktive Zwecke eingesetzt werden, dann können auch festere Werkstoffe wie bspw. Sperrholz, OSB-Platten oder Außenlagen aus Massivholz eingesetzt werden. Die Außenlagen sind üblicherweise zwischen 1 und 40 mm stark. Die Stärke der Außenlagen wird gewählt nach den statischen und konstruktiven Anforderungen an die jeweilige Leichtbau-Verbundplatte. Sollen bspw. Anleimer integriert werden oder sollen die Kanten der Leichtbau-Verbundplatte zwischen den beiden Außenlagen geschlossen oder besonders dekorativ gestaltet werden, dann kann es sich als zweckmäßig erweisen, die Decklagen stärker zu dimensionieren. Auf diese Weise können Falze, Nuten oder andere Ausnehmungen zum Einsetzen von Anleimern oder anderen dekorativen Gestaltungselementen eingebracht werden. Kommt es jedoch auf eine besonders dünne Platte an, oder sind die Anforderungen an die dekorative Gestaltung nicht besonders hoch, dann können auch ohne weiteres dünne Außenlagen verwendet werden.

Die Druckfestigkeit der erfindungsgemäßen Leichtbau-Verbundplatte erreicht Werte, die eine konstruktive Verwendung erlauben. Damit wird der Einsatzbereich der hier vorgeschlagenen Platte gegenüber dem Stand der Technik entscheidend erweitert. Dies ist darauf zurückzuführen, dass die Mittellage der Leichtbau-Verbundplatte nach Anspruch 1 eine weitaus höhere Eigenfestigkeit und Druckfestigkeit aufweist als Leichtbau-Verbundplatten mit konventionellen Mittellagen aus Papier oder Pappe. Während der Faserverbund bei Papier und Pappe durch Entwässern und Trocknen der Fasermatte entsteht, werden Holzwerkstoffplatten unter hohem Druck und hoher Temperatur verpresst, so dass Platten mit höheren Festigkeiten als Pappe und Papier entstehen. Es ist als besonderer Vorteil der verbesserten Druckfestigkeit anzusehen, dass die erfindungsgemäßen Leichtbau-Verbundplatten in Pressen beschichtet werden können. So können z. B. übliche Melaminbeschichtungen in Taktpressen mit bis zu 400 N/cm² Druck auf die Außenlagen aufgepresst werden. Dies ist mit herkömmlichen Leichtbau-Verbundplatten nicht möglich.

Gerade die winklige Anordnung der Mittellage, die bevorzugt zwischen 15° und 90°, besonders bevorzugt zwischen 15° und 85° beträgt, gewährleistet in Verbindung mit der relativ steifen Holzwerkstoffplatte eine günstige Kraftverteilung in der Leichtbau-Verbundplatte, die zu der insgesamt hohen Druckfestigkeit beiträgt.

Die erfindungsgemäße Mittellage bietet den besonderen Vorteil, dass Biegekräfte nicht nur in einer Richtung aufgenommen werden können. Die winklige Ausrichtung der Mittellage ermöglicht vielmehr das verbesserte Aufnehmen von Biegekräften in zwei Richtungen. Besonders vorteilhaft macht sich dies bemerkbar, wenn die erfindungsgemäße Platte als Decke oder Abdeckung eingesetzt wird. Die Durchbiegung einer erfindungsgemäßen, waagerecht angeordneten Leichtbau- Verbundplatte ist insgesamt geringer als die Durchbiegung vergleichbarer Platten. Damit eröffnen sich Möglichkeiten der Verwendung der erfindungsgemäßen Platte im konstruktiven Bereich, bspw. im Holzbau, die für bekannte Platten nicht denkbar sind. Außerdem ist das Kriechverhalten der erfindungsgemäßen Leichtbau-Verbundplatte gegenüber dem Stand der Technik signifikant verbessert, und zwar als Resultat der verbesserten Steifigkeit. Damit ist die Platte im Langzeit-Verhalten günstiger, weil ein Durchhängen der Platte bei Verwendungen mit größerer Spannweite weitgehend vermieden werden kann.

Nach einer bevorzugten Ausführung der erfindungsgemäßen Leichtbau-Verbundplatte ist die Mittellage aus stetig aneinander anschließenden, winklig angeordneten Holzwerkstoffplatten-Abschnitten gebildet. Die Ausführung der Mittellage nicht aus einzelnen, individuell anzuordnenden Holzwerkstoffplatten-Abschnitten sondern, bezogen auf die Abfolge der Holzwerkstoffplatten-Abschnitte, aus einer einstückigen Mittellage vereinfacht die Herstellung der Leichtbau-Verbundplatte sehr. Die Mittellage kann aus einzelnen Abschnitten von Spanplatten vorab gefügt, inbesondere verleimt oder verklebt werden. Alternativ kann eine durchgehende Holzwerkstoffplatte durch z. B. Nuten und Falten in die gewünschte Form gebracht werden, ggf. zusätzlich unterstützt durch das Verkleben der Nutwangen miteinander. Letzteres lässt sich in einer industriellen Fertigung besonders einfach und wirtschaftlich umsetzen.

Bevorzugt ist die Mittellage wollen- oder zick-zack-förmig gestaltet. Durch diese Anordung werden die Festigkeitseigenschaften der Verbundplatte insgesamt verbessert. Die Mittellage lässt sich zudem einfach vorfertigen und verarbeiten. Die zick-zack-förmige Ausgestaltung der Mittellage ist vorstehend beschrieben worden. Eine Wellenform kann einer Holzwerkstoff-Mittellage bereits bei der Herstellung oder auch nachträglich durch Einwirkung von Druck und Temperatur aufgeprägt werden.

Die Mittellage liegt nach einer einfachen Ausführung der erfindungsgemäßen Platte linienförmig an der Außenlage an. Bevorzugt wird es, wenn die Mittellage flächig an der Außenlage anliegt, weil so eine bessere Krafteinleitung und -verteilung erreicht wird und weil vermieden wird, dass sich die Mittellage unter großer Last als Linie auf der Außenlage abzeichnet. Das flächige Anliegen der Mittellage an der Außenlage wird erreicht, indem die Mittellage flächige Anlage-Abschnitte aufweist. Diese flächigen Abschnitte können entweder durch Abtragen oder durch Verdichten der Holzwerkstoffplatte erzeugt werden. Besonders einfach ist das Fräsen der Holzwerkstoffplatte im Bereich der Anlage-Abschnitte, weil dadurch präzise definierte Anlage-Abschnitte erzeugt werden können.
Insbesondere dann, wenn die Mittellage als eigenständiges Zwischenprodukt erzeugt wird, ist es bevorzugt, wenn eine winklig gefaltete Holzwerkstoffplatte jeweils an den Nutwangen, an denen die einzelnen Abschnitte aneinander angrenzen, mit Leim oder Klebstoff versehen ist. Das Verleimen oder Verkleben gewährleistet eine bessere Stabilität und einfachere Handhabung bei der Verarbeitung der Mittellage zu einer Leichtbau-Verbundplatte.

Gegenstand der Erfindung ist weiter eine Mittellage aus Holzwerkstoffplatte mit winklig angeordneten Abschnitten, die jeweils durch eine Klebstoff-Schicht verbunden sind. Bevorzugt weist diese Mittellage aus Holzwerkstoffplatte abgeflachte Anlage-Abschnitte auf. Eine solche Mittellage kann in ihren Dimensionen gut auf verschiedene Verwendungen, sowohl für dekorative Platten als auch für Platten mit konstruktivem Einsatzzweck gefertigt werden.

Die erfindungsgemäße Mittellage kann mit verschiedensten Außenlagen, beispielsweise Massivholz, Spanplatten einschließlich OSB-Platten, Faserplatten, Sperrholz, zu einer Leichtbau-Verbundplatte verbunden, in der Regel verleimt werden. Die Außenlagen können roh bleiben oder dekorativ gestaltet sein, beispielsweise durch Furnier- oder Kunststoff-Dekore, durch Lackauftrag oder durch Putzen oder Streichen. Als besonderer Vorteil ist hervorzuheben, dass die fertige Leichtbau-Verbundplatte nachträglich noch hohem Druck ausgesetzt werden kann, beispielsweise zum Aufbringen einer Melaminharzbeschichtung, die in einer Taktpresse mit einem Druck von bis zu 400 kg/m² aufgebracht wird. Die Kanten können in beliebiger Weise gestaltet sein, z. B. auch durch Umleimer aus dem Material der Außenlagen oder durch Massivholz-Umleimen.

Gegenstand der Erfindung ist weiterhin ein Verfahren zur Herstellung einer Mittellage für eine Verbundplatte mit den Schritten
- Formen einer Holzwerkstoffplatte
- Einbringen von Nuten oder Trennschnitten in die Holzwerkstoffplatte, wobei die Nuten oder Trennschnitte in der Oberseite und in der Unterseite der Holzwerkstoffplatte angeordnet sind, und
- Falten und ggf. Verleimen der Holzwerkstoffplatte in eine zick-zack- oder wellenförmige Mittellage.

Das erfindungsgemäße Verfahren kann kontinuierlich und diskontinuierlich durchgeführt werden. Das Formen der Holzwerkstoffplatte erfolgt bevorzugt auf kontinuierlichen Herstellungsanlagen, wie sie insbesondere für dünne Spanplatten oder MDF- und HDF-Platten üblich sind. Unmittelbar nach dem Formen einschließlich Pressen der Holzwerkstoffplatten werden Nuten in die Holzwerkstoffplatte eingebracht. Es können auch Trennschnitte vorgesehen werden, die die Holzwerkstoffplatte in einzelne Abschnitte zerlegen; bevorzugt werden jedoch Nuten oder Kerben in die Holzwerkstoffplatte eingebracht, die ein Falten der insgesamt noch zusammenhängenden Platte ermöglichen. Die Festigkeit der so hergestellten Mittellage ist höher und die Fertigung ist einfacher als beim Herstellen einer Mittellage aus einzelnen Abschnitten.

Die Nutwangen oder die Schnittflächen, die durch die Trennschnitte entstehen, können -falls erforderlich- mit Klebstoff versehen werden, so dass das Falten zu einem Verkleben oder Verleimen der Abschnitte der Mittellage führt. Dabei kann vorteilhaft ausgenutzt werden, dass die in den Holzwerkstoffplatten noch vorhandene Restwärme des Formens in aller Regel zum Aushärten des Klebstoffs ausreicht, so dass die Verbindung ohne übermäßigen Druck zustande kommt, der nicht ohne weiteres auf die Mittellage aufgebracht werden könnte. Erfindungsgemäß können die mit Klebstoff versehenen Nutwangen miteinander oder -bei der Herstellung der erfindungsgemäßen Leichbau-Verbundplatte- mit einer Außenlage verklebt werden.

Die so hergestellte Mittellage ist ein einfach zu lagern, zu transportieren und zu verarbeitendes Produkt, das gut zu verarbeiten ist. Es weist eine größere Eigenfestigkeit auf als die Waben aus Pappe oder Papier, die bisher für Leichtbau-Verbundplatten als Mittellage eingesetzt wurden. Dabei liegt das Gewicht der Mittellage aus Holzwerkstoffplatte nur geringfügig über dem Gewicht bekannter Mittellagen.

Das erfindungsgemäße Verfahren kann besonders wirtschaftlich umgesetzt werden, wenn die Holzwerkstoffplatten in einer kontinuierlich arbeitenden Anlage hergestellt werden, an die sich die vorstehend geschilderte, weitere Verarbeitung zu einer zick-zack- oder wellenförmigen Mittellage anschließt.

Die Nuten weisen nach einer bevorzugten Ausführung der Erfindung einen Öffnungswinkel β zwischen 15° und 130° auf. Der Öffnungwinkel β gibt die Steigung der Spanplatte bezogen auf die Ebene der Leichtbau-Verbundplatte vor. Mit kleinem Öffnungswinkel β resultiert ein großer Winkel α. Vergrößert man den Öffnungswinkel β, verringert sich der Winkel α und die Mittellage nimmt eine flachere Anordnung zwischen den Außenlagen ein. Es liegt auf der Hand, dass durch die Wahl des Öffnungwinkels β die Mittellage sehr individuell gestaltet werden kann, so wie es der jeweilige Verwendungszweck erfordert.

Die Nuten werden vorzugsweise abwechselnd in die Oberseite und in die Unterseite der Holzwerkstoffplatte eingebracht. Damit gestaltet sich das Falten besonders einfach. Die Nuten können in symmetrischen oder unsymmetrischen Abständen eingebracht werden, auch die Öffnungswinkel β können wechseln, so dass ein Maximum an individuellen Gestaltungsmöglichkeiten für die zu erzeugende Mittellage gewährleistet ist.

Nach einer besonders vorteilhaften Ausführung des erfindungsgemäßen Verfahrens werden die Nutwangen bzw. die Schnittflächen des Trennschnitts mit Leim oder Klebstoff versehen, so dass die Holzwerkstoffplatte beim Falten an den Nutwangen bzw. Schnittflächen verklebt oder verleimt wird. Insbesondere dann, wenn die Holzwerkstoffplatte beim Verleimen oder Verkleben noch eine produktionsbedingt erhöhte Temperatur aufweist, unterstützt diese Wärme das Abbinden des Leims oder Klebstoffs. Auf diese Weise entsteht eine besonders belastbare Mittellage.

Das Falten der Mittellage geschieht auf besonders wirkungsvolle und effiziente Weise durch Zusammenschieben der Holzwerkstoffplatte, in deren Ober- und Unterseite Nuten eingebracht sind.

Die gefaltete Mittellage kann nach einer vorteilhaften Ausführung des erfindungsgemäßen Verfahrens mit abgeflachten Abschnitten versehen werden, die flächig an der Außenlage der Leichtbau-Verbundplatte anliegen. Dies geschieht bevorzugt dadurch, dass die Spitzen der gefalteten Mittellage plan gefräst oder gesägt werden. Da im Bereich der Spitzen die Materialstärke deutlich größer ist als die eigentliche Plattenstärke der Holzwerkstoffplatte, kann hier ohne Nachteil für die Stabilität der Mittelplatte Material abgenommen werden, um einen flächigen Anlage-Abschnitt zu schaffen.

Alternativ kann ein solch flächiger Anlage-Abschnitt auch durch Komprimieren der Spitzen der Mittellage geschaffen werden. Das Verdichten kann sich z. B. bei wellenförmigen Mittellagen auch beim Verleimen bzw. Verpressen der Außenlagen auf der Mittellage ergeben.

Details der Erfindung werden nachfolgend anhand eines Ausführungsbeispiels näher erläutert. Es zeigen:
- Fig. 1: eine erste Ausführung der Leichtbau-Verbundplatte gemäß der Erfindung
- Fig. 2 a-d: Schritte zur Herstellung einer erfindungsgemäßen Mittellage
- Fig. 3 a-c: zweite, dritte und vierte Ausführungen der erfindungsgemäßen Mittellage
- Fig. 4 a, b: eine fünfte Ausführung der erfindungsgemäßen Mittellage

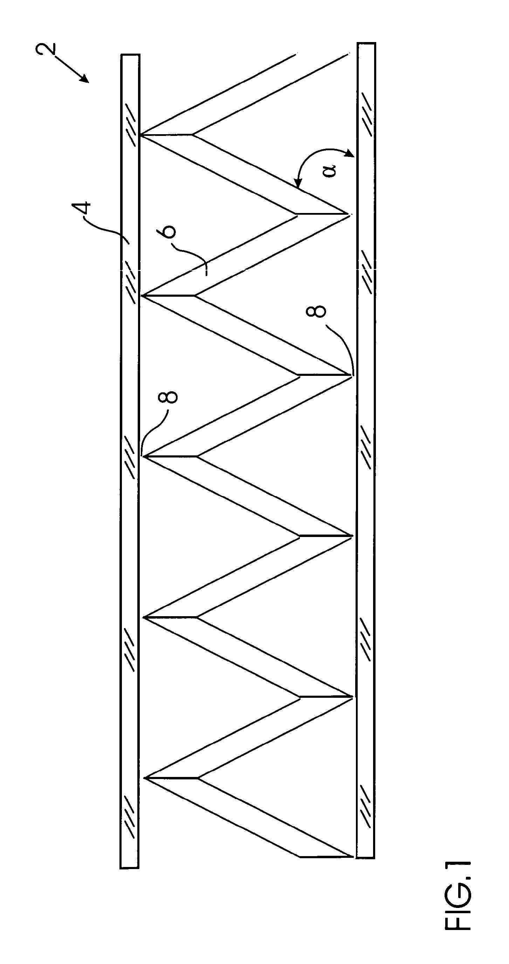

Fig. 1 zeigt eine Leichtbau-Verbundplatte 2, die zwei Außenlagen 4 aus 3 mm starker Spanplatte aufweist. Zwischen den Außenlagen ist eine Mittellage 6, ebenfalls aus 3 mm starker Spanplatte, angeordnet. Die Mittellage 6 ist -bezogen auf die Außenlagen 4, in einem Winkel α von ca. 65° ausgerichtet. Die Mittellage ist an den linienförmigen Anlage-Abschnitten 8 mit den Außenlagen 4 verleimt. Der Leim wird auf die Anlage-Abschnitte 8 aufgetragen, dann werden die Außenlagen 4 aufgelegt und die Leichtbau-Verbundplatte 2 wird unter geringem Druck verleimt. Es ist deshalb nur ein geringer Druck erforderlich, weil die Spanplatten unmittelbar nach dem Formen verarbeitet werden. Deshalb kann die Restwärme, die nach dem Pressen noch in der Spanplatte enthalten ist, zum beschleunigten Aushärten des Leims genutzt werden.

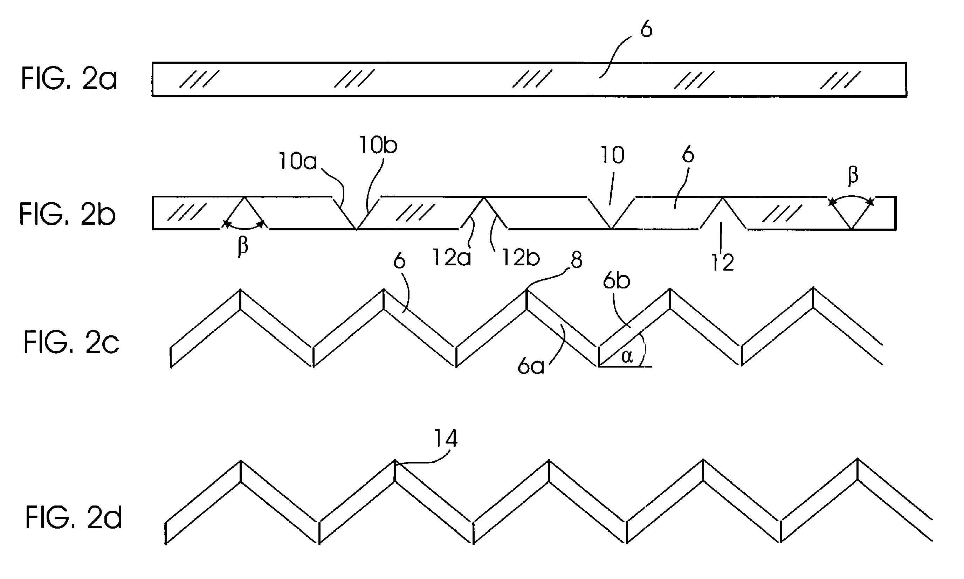

Fig. 2a zeigt eine Spanplatte 6 von 3 mm Materialstärke. Diese Spanplatte 6 ist soeben geformt worden, sie hat gerade die Presse verlassen. In die Spanplatte 6 werden, wie in Fig. 2b dargestellt, von der Oberseite Nuten 10 und von der Unterseite Nuten 12 eingefräst, die die Spanplatte 6 weitgehend, aber nicht vollständig durchtrennen. Die Nuten 10, 12 weisen einen Öffnungwinkel β von 75° auf. Die Nuten 10, 12 sind in gleichmäßigem Abstand angeordnet. Auf die Nutwangen 10a, 10b und 12a, 12b wird Klebstoff aufgetragen, der bei Temperaturen um ca. 60 °C besonders schnell abbindet. Fig. 2c zeigt die gefaltete Mittellage 6 aus Spanplatte, deren Abschnitte 6a, 6b in einem Winkel α von ca. 50° bezogen auf die aufzubringende Außenlage ausgerichtet sind. Der Winkel α wird durch den Öffnungswinkel β vorgegeben. Die Mittellage 6 weist linienförmige Anlage-Abschnitte 8 auf, jeweils dort, wo die Nutwangen 10a, 10b und 12a, 12b miteinander verleimt sind. Die Materialstärke an den Anlage-Abschnitten 8 ist größer als 3 mm. Fig. 2d zeigt, wie aus den linienförmigen Anlage-Abschnitten 8 flächige Anlage-Abschnitte 14 entstehen, nachdem die Spitzen der Anlage-Abschnitte 8 abgefräst sind.

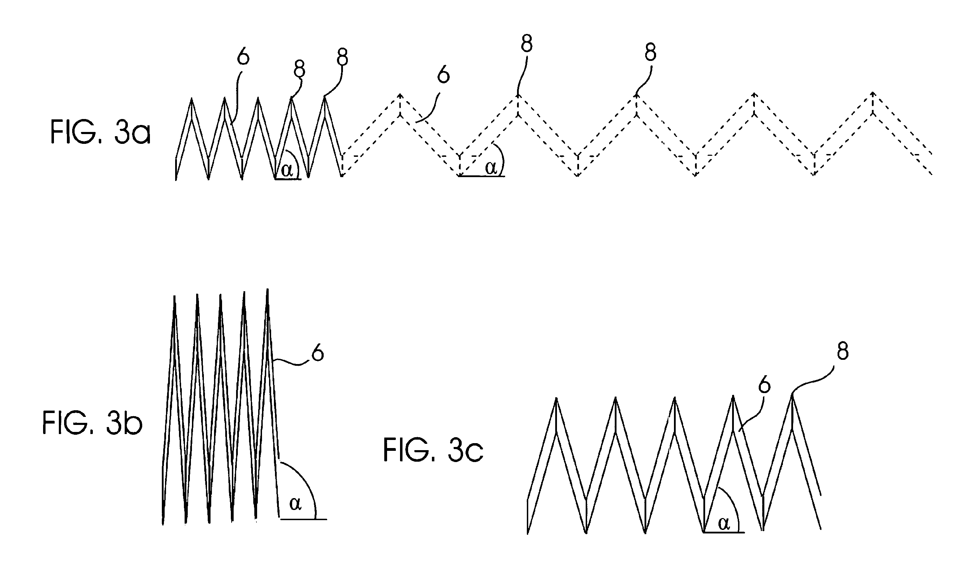

Fig. 3 zeigt verschiedene Ausführungen von Mittellagen 6, die jeweils aus 3 mm Spanplatten hergestellt sind. Fig. 3a zeigt im linken Bereich eine Mittellage 6 mit einem Winkel α von ca. 80°. Rechts an diese Mittellage 6 schließt sich eine Mittellage gleicher Höhe, aber mit weitaus niedrigerem Winkel α von ca. 40° an. Diese Mittellage 6 gemäß Fig. 3a kann beispielsweise eingesetzt werden, wenn die daraus herzustellende Leichtbau-Verbundplatte unterschiedliche Druckfestigkeit aufweisen soll. Die Spanplatten-Abschnitte, die mit höherem Winkel α angeordnet sind, ermöglichen aufgrund der höheren Materialdichte und der größeren Anlage-Abschnitte 8 die Aufnahme größerer Kräfte, insbesondere Druckkräfte. Die Leichtbau-Verbundplatte ist in diesem Abschnitt allerdings auch schwerer. In dem rechten Bereich kann die Leichtbau-Verbundplatte zwar nur geringere Druckkräfte aufnehmen, allerdings ist die Mittellage 6 in diesem Bereich auch sehr viel leichter, weil die Abschnitte der Spanplatte in einem geringeren Winkel α zueinander angeordnet sind.

Fig. 3b zeigt eine Ausführung der Mittellage 6, die aufgrund des hohen Winkels α von ca. 85° zur Aufnahme hoher Druckkräfte geeignet ist. Die Stärke der Mittelage 6 ist zudem sehr groß. Diese Mittellage eignet sich gut zum Herstellen einer Leichtbau-Verbundplatte für konstruktive Zwecke. Fig. 3c zeigt eine Mittellage geringerer Höhe, deren Abschnitte in einem niedrigeren Winkel α angeordnet sind, der etwa 60° beträgt. Eine solche Mittellage eignet sich für die Herstellung einer Leichtbau-Verbundplatte für den Möbelbau oder für den Innenausbau ohne größere konstruktive Beanspruchung.

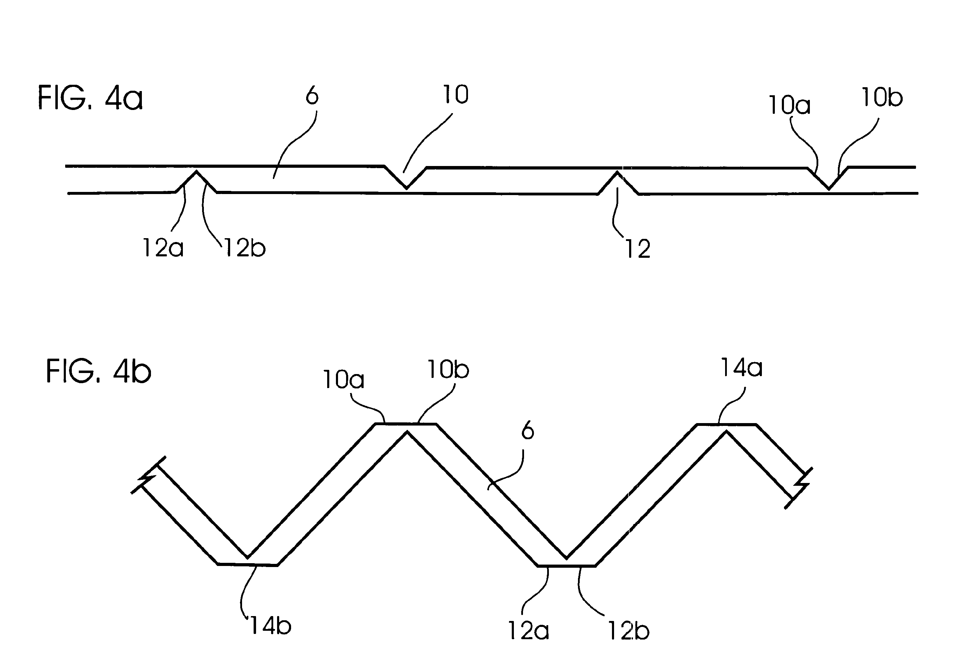

Fig. 4a zeigt eine besonders einfache und wirtschaftliche Ausführung der erfindungsgemäßen Mittellage 6. Nach dem Ausführungsbeispiels wird eine MDF-Platte mit einer Stärke von 6 mm verwendet. Die MDF-Platte wird mit Nuten 10 von der Oberseite der Mittellage 6 her und mit Nuten 12 von der Unterseite der Mittellage 6 her versehen. Die Tiefe der Nuten 10, 12 beträgt ca. 80 % der gesamten Plattenstärke der Mittellage 6.

Die so beidseits genutete Mittellage 6 wird -wie in Fig. 4b dargestellt- zu einer zick-zack-förmigen Mittellage aufgefaltet. Die Faltung erfolgt aber -im Gegensatz zu der in Fig. 2 gezeigten Faltung- so, dass die Nutwangen 10a, 10b, 12a und 12b jeweils zu den aufzubringenden Außenlagen hin ausgerichtet sind. Die Nutwangen werden also nicht wie in Fig. 2 dargestellt aufeinander zu sondern vielmehr voneinander weg gefaltet. Die Nutwangen 10a, 10b bilden damit die Auflagefläche 14a für die obere Außenlage und die Nutwangen 12a, 12b bilden damit die Auflagefläche 14b für die untere Außenlage.

## Patentansprüche

1. Leichtbau-Verbundplatte mit Außenlagen (4) aus Holzwerkstoff und mit einer Mittellage (6),
**dadurch gekennzeichnet, dass**
die Mittellage (6) aus Holzwerkstoffplatte gefertigt ist, und dass der Holzwerkstoff - bezogen auf die Ebene der Leichtbau-Verbundplatte (2) - in einem Winkel (α) zur Ebene der Leichtbau-Verbundplatte (2) angeordnet ist.

2. Leichtbau-Verbundplatte nach Anspruch 1, **dadurch gekennzeichnet, dass** die Holzwerkstoffplatte für die Mittellage (6) eine Spanplatte, eine OSB-Platte oder eine Faserplatte ist.

3. Leichtbau-Verbundplatte nach Anspruch 1, **dadurch gekennzeichnet, dass** der Winkel (α) mindestens 15° und maximal 90°, bevorzugt zwischen 15° und 85° beträgt.

4. Leichtbau-Verbundplatte nach Anspruch 1, **dadurch gekennzeichnet, dass** die Mittellage (6) aus stetig aneinander anschließenden, winklig angeordneten Holzwerkstoff-Abschnitten (6a, 6b) gebildet ist.

5. Leichtbau-Verbundplatte nach Anspruch 1, **dadurch gekennzeichnet, dass** die Mittellage (6) zick-zack-förmig oder wellenförmig ausgebildet ist.

6. Leichtbau-Verbundplatte nach Anspruch 1, **dadurch gekennzeichnet, dass** die Mittellage (6) aus einer durchgehenden Holzwerkstoffplatte oder aus Abschnitten (6a, 6b) von Holzwerkstoffplatten hergestellt ist.

7. Leichtbau-Verbundplatte nach Anspruch 1, **dadurch gekennzeichnet, dass** die Mittellage (6) linienförmig oder flächig an einer Außenlage (4) anliegt.

8. Leichtbau-Verbundplatte nach Anspruch 1, **dadurch gekennzeichnet, dass** die Mittellage abgeflachte Anlage-Abschnitte (14) aufweist.

9. Leichtbau-Verbundplatte nach Anspruch 1, **dadurch gekennzeichnet, dass** die Mittellage (6) und die Außenlagen (4) verleimt sind.

10. Mittellage aus Holzwerkstoffplatte für eine Leichtbau-Verbundplatte mit winklig angeordneten Abschnitten (6a, 6b), die jeweils durch eine Klebstoff-Schicht miteinander verbunden sind.

11. Mittellage aus einer Holzwerkstoffplatte nach Anspruch 10, **dadurch gekennzeichnet, dass** abgeflachte Anlage-Abschnitte (14) vorgesehen sind.

12. Mittellage aus Holzwerkstoff, **dadurch gekennzeichnet, dass** als Holzwerkstoff Spanplatte oder Faserplatte eingesetzt ist.

13. Verfahren zum Herstellen einer Mittellage (6) für eine Leichtbau-Verbundplatte (2) mit den Schritten
- Formen einer Holzwerkstoffplatte
- Einbringen von Nuten (10, 12) oder Trennschnitten in die Holzwerkstoffplatte, wobei die Nuten (10, 12) oder Trennschnitte auf der Oberseite und der Unterseite der Holzwerkstoffplatte angeordnet sind,
- Falten und ggf. Verleimen der Holzwerkstoffplatte in eine zick-zack- oder wellenförmige Mittellage (6).

14. Verfahren nach Anspruch 13, **dadurch gekennzeichnet, dass** die Holzwerkstoffplatte in einer kontinuierlich oder in einer diskontinuierlich arbeitenden Anlage geformt wird.

15. Verfahren nach Anspruch 13, **dadurch gekennzeichnet, dass** die Nuten (10, 12) einen Öffnungswinkel (β) zwischen 15° und 130° aufweisen, wobei die Nuten (10, 12) auf der Oberseite und der Unterseite der Holzwerkstoffplatte gleiche oder unterschiedliche Öffnungswinkel (β) und gleiche oder unterschiedliche Abstände zueinander aufweisen können.

16. Verfahren nach Anspruch 13, **dadurch gekennzeichnet, dass** die Nuten (10, 12) in symmetrischem Abstand oder in asymmetrischem Abstand angeordnet sind.

17. Verfahren nach Anspruch 13, **dadurch gekennzeichnet, dass** die Nutwangen (10a, 10b, 12a, 12b) mit Klebstoff versehen werden.

18. Verfahren nach Anspruch 17, **dadurch gekennzeichnet, dass** die mit Klebstoff versehenen Nutwangen (10a, 10b, 12a, 12b) miteinander oder mit einer Außenlage (4) verleimt werden.

19. Verfahren nach einem der Ansprüche 13 oder 14, **dadurch gekennzeichnet, dass** das Falten der Mittellage (6) durch Zusammenschieben der Holzwerkstoffplatte erfolgt.

20. Verfahren nach einem der Ansprüche 13,14 oder 15, **dadurch gekennzeichnet, dass** das Abbinden des Klebstoffs oder Leims durch die in der Platte nach dem Formen vorhandene Restwärme und/oder durch Druck auf die Holzwerkstoffplatte erfolgt.

21. Verfahren nach Anspruch 13, **dadurch gekennzeichnet, dass** an die Mittellage (6) Abschnitte (14) angeformt werden, an denen die Mittellage (6) an der Außenlage (4) anliegt.

22. Verfahren nach Anspruch 17, **dadurch gekennzeichnet, dass** die Anlage-Abschnitte (14) durch Abtragen von Holzwerkstoffplatten -Material, insbesondere durch Fräsen oder Schneiden hergestellt werden.

23. Verfahren nach Anspruch 13, **dadurch gekennzeichnet, dass** die Anlage-Abschnitte (14) an die Holzwerkstoffplatte durch Komprimieren des Holzwerkstoffplatten -Materials geformt werden.

24. Verfahren nach Anspruch 13, **dadurch gekennzeichnet, dass** als Holzwerkstoffplatte eine Spanplatte oder eine Faserplatte eingesetzt wird.

25. Verfahren zum Herstellen einer Mittellage (6) aus Holzwerkstoffplatte, bei der die Holzwerkstoffplatte auf einer kontinuierlichen Anlage hergestellt und im Anschluss daran wellenförmig gepresst wird.
